# EUROPEAN PATENT APPLICATION

(11) **EP 1 406 442 A2**
(43) Date of publication of application: **07.04.2004**
(21) Application number: 03255743.1
(22) Date of filing: 15.09.2003
(51) Int. Cl.: H04N 7/088, H04N 5/445

(54) **Teletext-enabled television apparatus**

(30) Priority: 24.09.2002 KR 2002057855
(71) Applicant: SAMSUNG ELECTRONICS CO., LTD., Suwon-City, Kyungki-do (KR)
(72) Inventor: Noh, Young-joong, Daegu-city (KR)
(74) Representative: Geary, Stuart Lloyd

(57) **Abstract**

A tele-text receiving apparatus (100) and a display method thereof. The tele-text receiving apparatus comprises an input unit (110) having a picture/text display mode key and a channel change mode key, and a control unit (200) for dividing a screen of the display unit (170) and respectively displaying information corresponding to channels tuned by the main-tuner (122) and the sub-tuner (124) on the divided screens when a picture/text display mode key signal is received through the input unit (110), the control unit (200) for controlling a selected screen of the divided screens according to a signal input through the input unit (110) when a channel change mode key signal for controlling any one screen of the divided screens is received through the input unit (110) during the picture/text display mode operation. Accordingly, it is possible to display the television programme picture of one television channel next to the teletext of another television channel concurrently.

## Description

The present invention relates to a teletext-enabled television apparatus comprising a display screen, control means and first tuner means, the control means being operable to display a television programme picture in a first display area of the display screen and teletext information in a second display area of the display screen.

Teletext (TTX) is service information such as weather information, traffic information, news, etc., that is viewed on a television set in the form of text and graphics. In general, a system for transmitting teletext provided by a broadcast television station is referred to as a teletext system. Such teletext information is included in a broadcast television signal sent from the broadcast television station.

A television set capable of displaying teletext information generally has at least one tuner. When the television set is switched to a teletext mode by a user, the television set decodes teletext information included in a broadcast television signal, tuned to by at least one tuner, and displays the teletext information.

The conventional teletext enabled television set has two display methods. The first is to display teletext information on the whole of the television screen, and the second is to divide the television screen into two display areas, i.e. a first display area for displaying an image signal corresponding to a channel tuned to and a second display area for displaying teletext information included in the channel tuned to.

In the case of displaying teletext information on the whole of the television screen, there is a problem that a user cannot keep viewing the programme he/she is watching. In order to solve this problem, the above-described split-screen display method has been suggested.

However, in the case of the split-screen display method it is only possible for a user to change between teletext pages when the television is in the teletext mode. In order to change the television channel, the user must exit the teletext mode first, which is inconvenient. Also, in the case of the split-screen display method, the teletext displayed in the second display area must be the teletext which is included in the broadcast television signal of the television channel being displayed in the first display area. It is, therefore, not possible to display the television programme picture of one television channel next to the teletext of another television channel concurrently.

A teletext-enabled television apparatus, according to the present invention, is characterised by second tuner means and the control means being operable to display teletext information received using the second tuner means in said second display area concurrently with a television programme picture, received using the first tuner means, in the first display area.

Preferably, the apparatus comprises user input means, wherein the control means is responsive to a user input command to switch between a programme-only mode, in which a television programme picture is displayed on the whole of the display screen, and a dual-display mode, in which teletext information received using the second tuner means is displayed in said second display area concurrently with a television programme picture, received using the first tuner means, in the first display area. More preferably, the control means is configured to selectively change the channel that the first or the second tuner means is tuned to in response to a user input command. Thus, it is possible to change the channels displayed on the television apparatus even when the television operates in a teletext mode.

An embodiment of the present invention will now be described, by way of example, with reference to the accompanying drawings, in which:
Figure 1 is a block diagram showing a preferred embodiment of a teletext-enabled television apparatus according to the present invention;
Figures 2A to 2E are views showing display areas on which a display unit displays when a picture/text display mode key and a channel change mode key are selected; and
Figure 3 is a flowchart showing a display method of the teletext-enabled television apparatus of Figure 1.

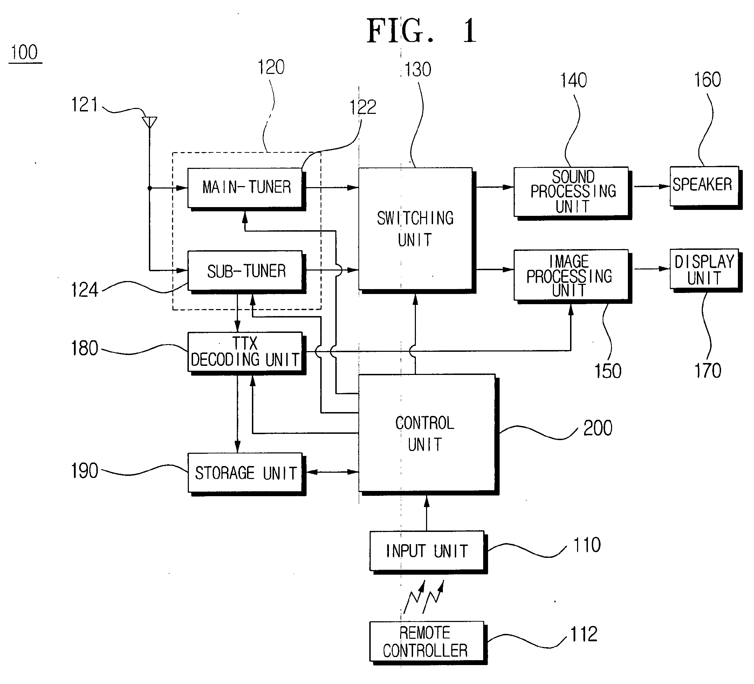

Referring to Figure 1, a teletext-enabled television apparatus (or teletext receiving apparatus) 100 has an input unit 110, a tuner unit 120, a switching unit 130, a sound processing unit 140, an image processing unit 150, a speaker 160, a display unit 170, a teletext (TTX) decoding unit 180, a storage unit 190 and a control unit 200.

The input unit 110 has a plurality of function keys that are provided on the main body of the teletext-enabled television apparatus 100 for performing the operations of the teletext-enabled television apparatus 100. A user inputs a selection command to the input unit 110 by using the plurality of function keys. In general, the user inputs the selection command from a remote location by using a remote controller 112 having a plurality of function keys (not shown).

In this embodiment, the input unit 110 and/or a remote controller 112 is provided with a picture/text display mode key (not shown) and a channel change mode key (not shown), wherein the picture/text display mode key is for displaying both broadcast television signals and the teletext information through the teletext-enabled television apparatus 100, and the channel change mode key is to control a display area displaying the broadcast television signals or a display area displaying teletext information. Alternatively, the teletext-enabled television apparatus 100 can be operated in the picture/text display mode by pressing a teletext mode key, without having to have the picture/text display mode key.

The tuner unit 120 includes a main-tuner 122 and a sub-tuner 124. The main-tuner 122 is tuned to a channel that is selected by a user from a plurality of broadcast television signals received via an antenna 121.

The sub-tuner 124 is tuned to a channel including teletext information, in accordance with the control of the control unit 200, when the teletext-enabled television apparatus 100 is switched to a teletext mode. Of the plurality of channels including the channel the main-tuner 122 is tuned to, the sub-tuner 124 is only tuned to the channel including the teletext information.

The switching unit 130 divides and outputs the image signal and the audio signal output from the main-tuner 122 and the sub-tuner 124 in accordance with the control of the controlling unit 200.

The sound-processing unit 140 processes the audio signal output from the switching unit 130 and outputs it to the speaker 160.

The image-processing unit 150 separates horizontal and vertical synchronization signals from the image signal received from the switching unit 130 in order to generate a brightness signal and a colour difference signal. From the brightness signal and the colour difference signal, the image-processing unit 150 outputs Red (R), Green (G) and Blue (B) signals.

The speaker 160 amplifies and outputs the audio signal output from the sound-processing unit 140.

The display unit 170 displays an image on a screen based on the brightness signal (Y) and the R, G and B signals output from the image-processing unit 150. The display unit 170 may use a Liquid Crystal Display (LCD).

The display unit 170 divides the screen thereof into first and second display areas in accordance with the control of the control unit 200 and displays on the respective display areas information corresponding to channels that the main-tuner 122 and the sub-tuner 124 are tuned to. The first display area is displays the image signal corresponding to the channel the main-tuner 122 is tuned to and the second display area is displays the teletext information included in the channel the sub-tuner 124 is tuned to.

The TTX decoding unit 180 detects and decodes the teletext information from the broadcast television signals including the teletext. The TTX decoding unit 180 decodes the information relating to a teletext page of the channel that the sub-tuner 124 is tuned to, in accordance with the control of the control unit 200, and data existing within the page.

The storage unit 190 stores the information relating to at least one teletext page and the data existing within the page that are decoded by the TTX decoding unit 180.

The control unit 200 controls the tuner unit 120, the switching unit 130, the sound-processing unit 140, the image-processing unit 150, the speaker 160, the display unit 170, the TTX decoding unit 180 and the storage unit 190 in response to input signals from the input unit 110.

More specifically, when the teletext-enabled television apparatus 100 is switched to a broadcast television mode by the input unit 110 or the remote controller 112, the control unit 200 controls the image-processing unit 150 and the sound-processing unit 140 to output the image and the audio signals through the display unit 170 and the speaker 160, respectively.

Alternatively, when the teletext-enabled television apparatus 100 is switched to a teletext mode, on receiving a picture/text display mode signal from the input unit 110, the control unit 200 controls the display unit 170 to split the screen and display the information corresponding to the channels that the main-tuner 122 and the sub-tuner 124 are tuned to on respective display areas.

When the teletext-enabled television apparatus 100 receives a channel change mode signal from the input unit 110, for controlling any one of the display areas while it operates in the picture/text display mode, the control unit 200 controls any one of the display areas in response to a signal input through the input unit 110.

The manner in which the display unit 170 operates in accordance with the control of the control unit 200, when the picture/text display mode key and the channel change mode key of the input unit 110 or the remote controller 112 are selected, will now be described.

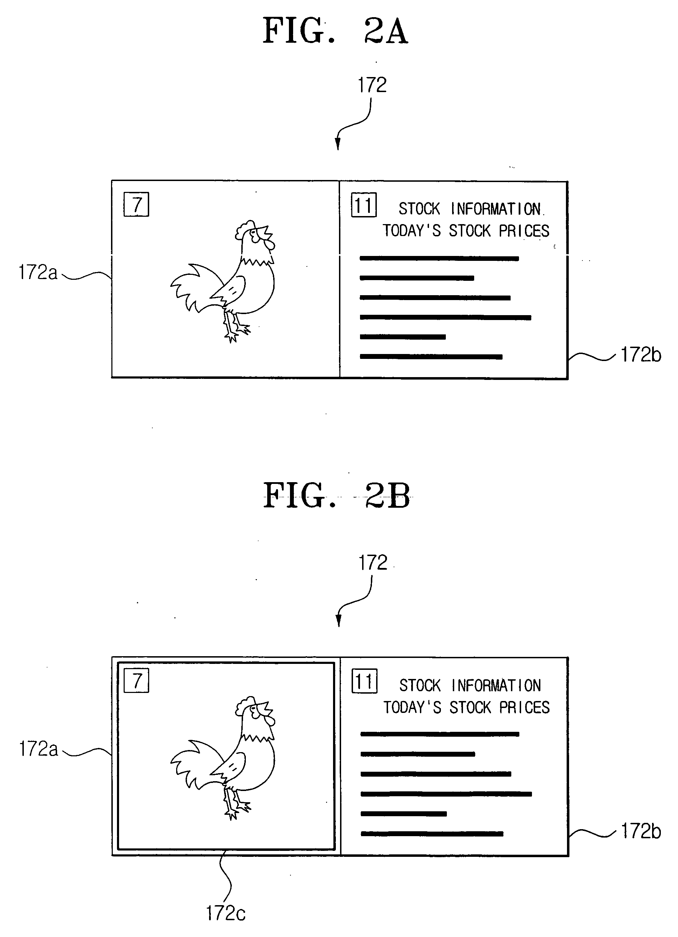

Referring to Figure 2A, when the picture/text display mode key is selected using the input unit 110 or the remote controller 112, the control unit 200 vertically divides the screen 172 of the display unit 170 into a first display area 172a and a second display area 172b. An image signal corresponding to the channel that the main-tuner 122 is tuned to, channel '7', is displayed on the first display area 172a, while teletext information included in a broadcast television signal of channel '11' is displayed on the second display area 172b.

When the teletext-enabled television apparatus 100 receives the channel change mode signal for controlling any one display area of the first and the second display areas 172a and 172b from the input unit 110 while it operates in the picture/text display mode. a control box 172c is displayed in the first display area 172a as shown in Figure 2B. The position of the control box 172c can be manipulated by means of a multi-directional direction key (not shown) disposed on the remote controller 112. Various embodiments of the control box 172c include a shaded region of the display area or a differently coloured region, so that the user recognises which of the first and second display areas 172a, 172b is selected.

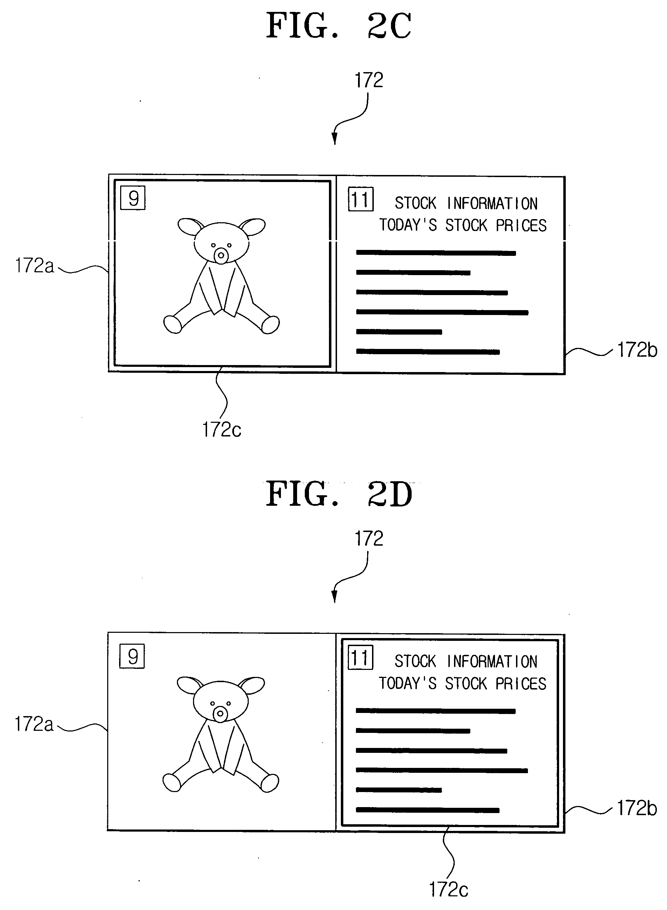

When a first display area 172a-selecting signal is received due to the manipulation of the direction key on the remote controller 112, the control unit 200 controls the first display area 172a in accordance with the signal input through the input unit 110. For example, it is possible to the change to the channel displayed on the first display area 172a by manipulating a numeral key and the direction key provided on the remote controller 112. Accordingly, as shown in Figure 2C, the first display area 172a is changed to the channel '9'.

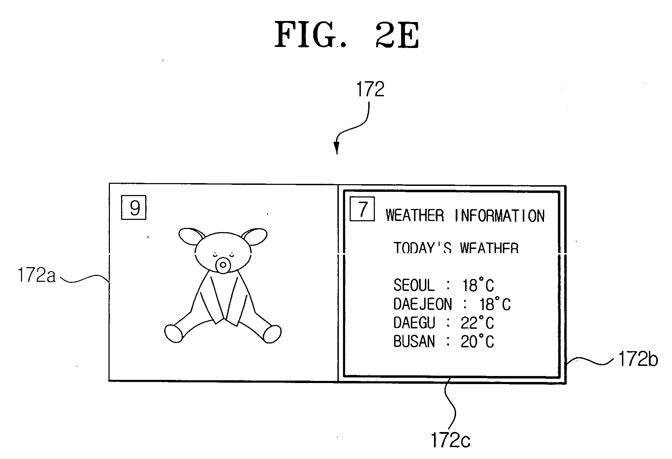

Alternatively, when the second display area 172b is selected due to the manipulation of the direction key provided on the remote controller 112, the control box 172c is displayed in the second display area 172b as shown in Figure 2D. After receiving a second display area 172b-selecting signal, the control unit 200 controls the second display area 172b in accordance with a signal input using the remote controller 112 or the input unit 110. In this case, like the control of the first display area 172a, it is possible to change the channel displayed on the second display area 172b by manipulating a numeral key and the direction key provided on the remote controller 112. As shown in Figure 2E, the second display area 172b is changed to so that it displays teletext information included in a broadcast television signal of the channel '7'.

Accordingly, it is possible to change the channels displayed in the first and second display areas 172a, 172b even when the teletext-enabled television apparatus 100 operates in the teletext mode.

A display method of the teletext-enabled television apparatus 100 operating in the teletext mode will now be described.

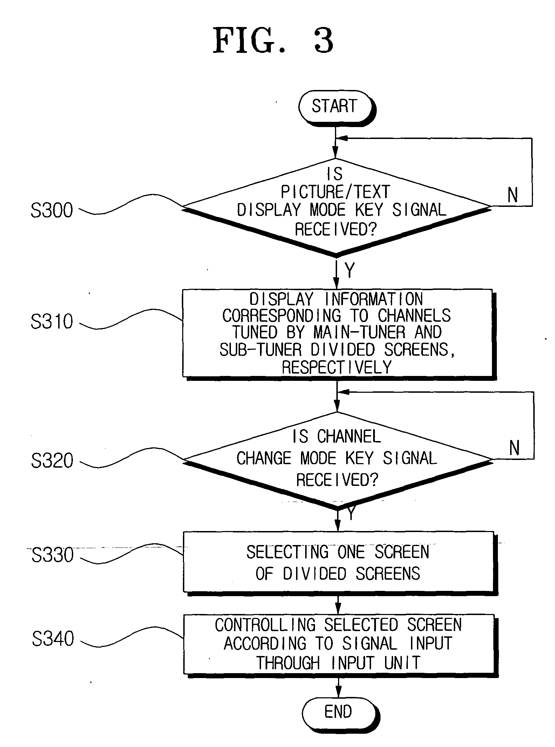

Referring to Figure 3, the control unit 200 first determines whether a picture/text display mode signal is received from the input unit 110 or the remote controller 112 (S300). If it is determined that the picture/text display mode signal is received in S300, the control unit 200 divides the screen of the display unit 170 into first and second display areas 172a, 172b and displays the information corresponding to the channels that the main-tuner 122 and the sub-tuner 124 are tuned to on the first and second display areas 172a, 172b, respectively (S310). Also, the control unit 200 determines whether a channel change mode signal for controlling any one area of the first and second display areas 172a, 172b is received while the teletext-enabled television apparatus 100 operates in the picture/text display mode (S320).

If it is determined that the channel change mode signal is received in S320, the control box 172c is displayed to allow a user to select any one of the first and second display areas 172a, 172b. The user selects a display area that he/she wants to control by using the direction key provided on the remote controller 112 (S330).

If any one area of the first and second display areas 172a, 172b is selected by the manipulation of the direction key provided on the remote controller 112, the control unit 200 controls the selected display area in accordance with a signal input using the input unit 110 (S340).

That is, in the case that the first display area 172a is selected, the control unit 200 controls the first display area 172a in accordance with a signal input using the input unit 110. In this case, it is impossible for the signal input using the input unit 110 to control the second display area 172b.

In the case that the second display area 172b is selected, the control unit 200 controls only the second display area 172b in accordance with a signal input using the input unit 110 after receiving the second area display 172b-selecting signal. In this case, it is impossible for the signal input using the input unit 110 to control the first display area 172a.

As described above, it is possible to control the display area where the broadcast television signal is displayed and the display area where the teletext information is displayed even when the teletext-enabled television apparatus 100 operates in the teletext mode. That is, changing the displayed broadcast television channel and/or the displayed channel including the teletext information becomes possible.

A teletext-enabled television apparatus 100 and a display method thereof allowing a user to simultaneously view both a broadcast television program and teletext information when selecting the picture/text display mode are provided. In addition, even while the teletext-enabled television apparatus 100 operates in a teletext mode, it is possible to change the broadcast television channel and the channel including the teletext information. Thus, the teletext-enabled television apparatus 100 is convenient to use.

## Claims

1. A teletext-enabled television apparatus (100) comprising a display screen (172), control means (200) and first tuner means (122), the control means (200) being operable to display a television programme picture in a first display area (172a) of the display screen (172) and teletext information in a second display area (172b) of the display screen (172), **characterised by** second tuner means (124) and the control means (200) being operable to display teletext information received using the second tuner means (124) in said second display area (172b) concurrently with a television programme picture, received using the first tuner means (122), in the first display area (172a).

2. An apparatus according to claim 1, comprising user input means (110), wherein the control means (200) is responsive to a user input command to switch between a programme-only mode, in which a television programme picture is displayed on the whole of the display screen (172), and a dual-display mode, in which teletext information received using the second tuner means (124) is displayed in said second display area (172b) concurrently with a television programme picture, received using the first tuner means (122), in the first display area (172a).

3. An apparatus according to claim 2, wherein the control means (200) is configured to selectively change the channel that the first or the second tuner means (122, 124) is tuned to in response to a user input command.

4. A tele-text receiving apparatus displaying a broadcasting signal and tele-text information received from a main-tuner and a sub-tuner on a display unit, the tele-text receiving apparatus comprising:
an input unit having a picture/text display mode key and a channel change mode key; and
a control unit for dividing a screen of the display unit and respectively displaying information corresponding to channels tuned by the main-tuner and the sub-tuner on the divided screens when a picture/text display mode key signal is received through the input unit, the control unit for controlling a selected screen of the divided screens according to a signal input through the input unit when a channel change mode key signal for controlling any one screen of the divided screens is received through the input unit during the picture/text display mode operation.

5. The tele-text receiving apparatus of claim 4, wherein the screen of the display unit is divided into a first and a second display screens, and the control unit displays an image signal of a channel tuned by the main-tuner on the first display screen and the tele-text information included in a channel tuned by the sub-tuner on the second display screen.

6. The tele-text receiving apparatus of claim 5, wherein the control unit controls the first display screen according to a signal input through the input unit when a first display screen selecting signal is received after the channel change mode key signal is received.

7. The tele-text receiving apparatus of claim 5, wherein the control unit controls the second display screen according to a signal input through the input unit when a second display screen selecting signal is received after the channel change mode key signal is received.

8. A display method of a tele-text receiving apparatus displaying a broadcasting signal and tele-text information received from a main-tuner and a sub-tuner on a display unit, the display method comprising the steps of:
determining whether a command signal for changing to a picture/text mode is received;
dividing a screen of the displaying unit when the command signal for changing to the picture/text mode is received and respectively displaying information corresponding channels tuned by the main-tuner and the sub-tuner on the divided screens; and
controlling a selected screen of the divided screens according to a signal input through the input unit when a command signal to change to a channel change mode for controlling any one screen of the divided screens is received through the input unit during the picture/text display mode operation.

9. The display method of claim 8, wherein the screen of the display unit is divided into a first and a second display screens, and on the first display screen is displayed an image signal of a channel tuned by the main-tuner and on the second display screen is displayed the tele-text information included in a channel tuned by the sub-tuner.

10. The display method of claim 9, wherein the controlling step controls the first display screen according to a signal input through the input unit when a first display screen selecting signal is received after the command signal to change to the channel change mode is received.

11. The display method of claim 9, wherein the controlling step controls the second display screen according to a signal input through the input unit when a second display screen selecting signal is received after the command signal to change to the channel change mode is received.
